Europäisches Patentamt

(19) European Patent Office

Office européen des brevets

(11) **EP 1 189 518 B1**

(12) **EUROPÄISCHE PATENTSCHRIFT**

(45) Veröffentlichungstag und Bekanntmachung des Hinweises auf die Patenterteilung:
**08.12.2004 Patentblatt 2004/50**

(21) Anmeldenummer: **00951291.4**

(22) Anmeldetag: **23.06.2000**

(51) Int Cl.⁷: $A23K\ 1/00$, $A23K\ 1/165$

(86) Internationale Anmeldenummer:
**PCT/EP2000/005793**

(87) Internationale Veröffentlichungsnummer:
**WO 2001/000042 (04.01.2001 Gazette 2001/01)**

(54) **POLYMERBESCHICHTETE, GRANULIERTE ENZYMHALTIGE FUTTERMITTELZUSÄTZE UND VERFAHREN ZU DEREN HERSTELLUNG**

POLYMER-COATED, GRANULATED ENZYME-CONTAINING FEED ADDITIVES AND METHOD FOR THE PRODUCTION THEREOF

ADDITIFS GRANULES, REVETUS DE POLYMERES ET CONTENANT DES ENZYMES, DESTINES A DES ALIMENTS POUR ANIMAUX, ET PROCEDE DE PRODUCTION CORRESPONDANT

(84) Benannte Vertragsstaaten:
**AT BE CH CY DE DK ES FI FR GB GR IE IT LI LU MC NL PT SE**

(30) Priorität: **25.06.1999 DE 19929257**

(43) Veröffentlichungstag der Anmeldung:
**27.03.2002 Patentblatt 2002/13**

(73) Patentinhaber: **BASF AKTIENGESELLSCHAFT**
**67056 Ludwigshafen (DE)**

(72) Erfinder:
• **HARZ, Hans-Peter**
 **D-67373 Dudenhofen (DE)**
• **BETZ, Roland**
 **D-67150 Niederkirchen (DE)**
• **SCHÖNER, Franz-Josef**
 **D-67480 Edenkoben (DE)**
• **MEESTERS, Gabriel, Marinus, H.**
 **NL-2614 TJ Delft (NL)**
• **ANDELA, Carl, Sidonius, Maria**
 **NL-2625 LL Delft (NL)**

(74) Vertreter: **Kinzebach, Werner, Dr. et al**
**Patentanwälte**
**Reitstötter, Kinzebach und Partner**
**Postfach 86 06 49**
**81633 München (DE)**

(56) Entgegenhaltungen:

| | |
|---|---|
| **EP-A- 0 913 468** | **WO-A-00/36927** |
| **WO-A-00/47060** | **WO-A-00/70034** |
| **WO-A-94/26883** | **WO-A-97/12958** |
| **WO-A-98/54980** | **WO-A-99/51210** |

• **DATABASE WPI Section Ch, Week 199627 Derwent Publications Ltd., London, GB; Class A11, AN 1996-263781 XP002152846 -& JP 08 109126 A (AMANO PHARM KK), 30. April 1996 (1996-04-30)**
• **DATABASE WPI Section Ch, Week 199503 Derwent Publications Ltd., London, GB; Class B02, AN 1995-019176 XP002152847 -& JP 06 305960 A (TERUMO CORP), 1. November 1994 (1994-11-01)**

EP 1 189 518 B1

**Beschreibung**

Die vorliegende Erfindung betrifft neuartige Verfahren zur Herstellung polymerbeschichteter, granulierter, enzymhaltiger Futtermittelzusätze, die auf diese Weise hergestellten polymerbeschichteten Granulate, sowie pelletierte Futtermittelzusammensetzungen, welche unter Verwendung der polymerbeschichteten Granulate erhältlich sind.

Es ist allgemein üblich, Tierfutter Enzyme zuzugeben, um eine bessere Futterverwertung zu gewährleisten. Außerdem ist es gängige Praxis, Tierfutter in pelletierter Form zu verfüttern, da eine Pelletierung nicht nur die Futteraufnahme erleichtert, sondern auch die Handhabung des Futters verbessert. Darüber hinaus hat sich gezeigt, dass bestimmte Futterbestandteile durch Pelletierung besser verdaut werden und dem Futter zugesetzte Inhaltsstoffe, wie z. B. Vitamine, Enzyme, Spurenelemente, in der Futtermischung besser eingeschlossen werden können.

Zur Verbesserung der Haltbarkeit solcher Futterpräparate ist außerdem eine Hitzebehandlung von Vorteil. Eine Hitzebehandlung erfolgt auch im Rahmen des für die Konditionierung erforderlichen Pelletierens, bei dem das Futter mit Dampf versetzt und dadurch erhitzt und befeuchtet wird. Beim eigentlichen Pelletierschritt wird das Futter durch eine Matrize (Lochplatte) gedrückt. Andere in der Futtermittelindustrie zum Einsatz kommende Prozesse sind das Extrudieren und Expandieren. Die Hitzeeinwirkung bei all diesen Prozessen stellt insbesondere dann ein Problem dar, wenn Enzyme, die in der Regel thermisch instabil sind, in der Zusammensetzung enthalten sind. Es wurden daher verschiedene Anstrengungen unternommen, die thermische Stabilität und insbesondere die Pelletierstabilität enzymhaltiger Futtermittelzusammensetzungen zu verbessern.

In der EP-A-0 257 996 wird beispielsweise vorgeschlagen, Enzyme für Futtermischungen dadurch zu stabilisieren, dass sie im Gemisch mit einem Träger, der einen Hauptanteil an Getreidemehl aufweist, pelletiert werden.

In der WO 92/12645 wird vorgeschlagen, Futtermittelenzyme in sogenanntes T-Granulat einzuarbeiten. Dieses T-Granulat umfasst einen Anteil von 2 bis 40 Gew.-% Cellulosefasern. Dieses spezielle Granulat wird dann in spezifischer Weise beschichtet. Die Beschichtung umfasst einen hohen Anteil, vorzugsweise etwa 60 bis 65 Gew.-% eines anorganischen Füllstoffes, wie z. B. Kaolin, Magnesiumsilicat oder Calciumcarbonat. Wie aus den Ausführungsbeispielen der WO 92/12645 hervorgeht, ist eine einstufige Auftragung der Beschichtung nicht möglich. Vielmehr müssen in mehreren Schritten abwechselnd ein hochschmelzendes Fett oder Wachs und der Füllstoff auf das T-Granulat aufgetragen werden. Die Nachteile des in diesem Stand der Technik vorgeschlagenen Lösungswegs für eine Verbesserung der Pelletierstabilität sind evident. Zum einen ist ein ganz spezielles Trägermaterial zwingend erforderlich, zum anderen ist eine aufwendige mehrstufige Beschichtung des Trägermaterials notwendig.

In der WO 98 54980 wird vorgeschlagen, Hilfs- oder hydrophobische gelbildende - Mittel für die Verbesserung der Pelletierstabibität hinzuzufügen.

Mit Fett oder Wachs beschichtete Granulate weisen zudem Nachteile auf. Trotz Trennmittel neigen diese Produkte während der Lagerung zum Verkleben. Aufgrund der Hydrophobie der Beschichtung lösen sich die Granulate viel schlechter auf. Es konnte gezeigt werden, dass durch diese spezielle Beschichtungsarten die Bioverfügbarkeit der Inhaltsstoffe der Granulate verringert wird.

Es ist deshalb Aufgabe der vorliegenden Erfindung neuartige pelletierstabile Futtermittelzusätze, die oben genannte Nachteile nicht aufweisen, und Verfahren zu deren Herstellung bereitzustellen. Erfindungsgemäß wurde überraschenderweise festgestellt, dass pelletierstabile Futtermittelzusätze auch unabhängig von dem aus dem Stand der Technik bekannten T-Granulat-Träger herstellbar sind, wenn man ein enzymhaltiges Rohgranulat mit einem füllstofffreien organischen Polymerüberzug versieht. Überraschenderweise konnte außerdem festgestellt werden, dass die erfindungsgemäßen polymerbeschichteten Futtermittelzusätze eine ausgezeichnete Pelletierstabilität besitzen, einen wirksamen Schutz vor Enzymexposition bieten, die Lagerstabilität der Futtermittelzusätze und insbesondere die Stabilität in Mineralfutter und Mineralprämix deutlich verbessern.

Ein erster Gegenstand der Erfindung betrifft ein Verfahren zur Herstellung eines polymerbeschichteten, granulierten, enzymhaltigen Futtermittelzusatzes, wobei man

(1) ein Gemisch umfassend einen futtermitteltauglichen Träger und wenigstens ein Enzym zu einem Rohgranulat verarbeitet; und

(2) das Rohgranulat, vorzugsweise nach Trocknung, z. B. auf eine Restfeuchte von kleiner etwa 10 Gew.-%, mit einem futtermitteltauglichen organischen Polymer beschichtet, indem man das Rohgranulat

(2a) in einem Wirbelbett mit einer Schmelze, einer Lösung oder einer Dispersion des organischen Polymers besprüht oder in einem Wirbelbett eine Pulverbeschichtung mit dem organischen Polymer durchführt; oder

(2b) in einem Mischer durch Aufschmelzen des organischen Polymers beschichtet, oder mit einer Schmelze, einer Lösung oder einer Dispersion des organischen Polymers besprüht oder eine Pulverbeschichtung mit dem organischen Polymer durchführt;

und das jeweils erhaltene polymerbeschichtete Granulat gegebenenfalls nachtrocknet, abkühlt und/oder von Grobanteilen befreit.

Die Verwendung einer Beschichtung aus Polyethylenglycol, aufgebracht als Schmelze oder wässrige Lösung, ist ausgenommen, da bekannt aus der nicht vorveröffentlichten WO-A-0 047 060.

Das Rohgranulat kann dabei auf verschiedenste Weise hergestellt werden. Beispielsweise kann man ein Gemisch, umfassend den futtermitteltauglichen Träger und eine Lösung wenigstens eines Enzyms durch Extrusion, Mischergranulation, Wirbelschichtgranulation, Telleragglomeration oder Kompaktierung in an sich bekannter Weise zu einem Rohgranulat verarbeiten. Bevorzugt erfolgt die Herstellung durch Mischergranulation oder Extrusion. Insbesondere durch Extrusion wird eine homogene Korngröße, d. h. enge Korngrößenverteilung des Granulats, gewährleistet. Abschließend wird das Rohgranulat vorzugsweise getrocknet.

Außerdem kann es je nach Extrusionsprozess erforderlich sein, das noch feuchte Rohgranulat vor Durchführung der Trocknung und Polymerbeschichtung zu sphäronisieren, wodurch insbesondere die Bildung unerwünschter Staubanteile verringert wird.

Bevorzugt ist eine Herstellung des Rohgranulats im Extruder, gegebenenfalls gefolgt von einem Sphäronisierungsschritt. Ein derartiger Granulierprozess umfasst im Wesentlichen folgende Schritte:

1) Anmaischen der zu granulierenden Masse
2) Extrudierung
3) Sphäronisierung (optional)
4) Trocknung

Das Anmaischen erfolgt dabei in einem Mischer bzw. Kneter. Dazu werden die Feststoffe (z. B. Maisstärke-Träger) mit der flüssigen Phasen (z. B. Enzymlösung) intensiv vermischt. Wichtig für den späteren Extrusionsschritt ist die Einstellung der richtigen Konsistenz; dies geschieht über die Variation der Flüssikgeitsmenge. Da in der Regel auf eine bestimmte Enzymaktivität eingestellt werden muss, kann die Menge an Enzymlösung nicht frei variiert werden. Die Konsistenz wird daher durch Zusatz von Wasser oder einer wässrigen Lösung, die gegebenenfalls einen Binder enthält, eingestellt.

Das Extrudieren erfolgt in einem Apparat, bei dem die zu granulierende Masse durch eine Matrize gedrückt wird. Der Lochdurchmesser der Matrize bestimmt den Teilchendurchmesser und liegt zwischen 0,5 und 2 mm. Die ausgeformten Stränglinge gelangen in den anschließenden Spheronizer. Bei richtiger Konsistenz der zu granulierenden Masse ergibt sich ein nur geringer Temperaturanstieg beim Passieren der Matrize (bis ca. 20 °C). Ist die Masse zu trocken, ist der Temperaturanstieg und der Druckaufbau viel höher, was zu teilweisem Verlust an Enzymaktivität führen kann.

Geeignete Extruder werden z. B. als Domextruder oder Korbextruder bezeichnet und unter anderem von Firmen wie Fitzpatrick oder Bepex vertrieben.

Der Spheronizer besteht im Wesentlichen aus einer horizontal rotierenden Scheibe, auf der die Stränglinge durch die Zentrifugalkraft an die Wand gedrückt werden. Die Stränglinge brechen an den durch den Extrusionsprozess vorgegebenen Mikrokerben auf, so dass zylinderförmige Teilchen mit einem Verhältnis von Durchmesser zu Längen von etwa 1:1,3 bis 1:3 entstehen. Durch die Beanspruchung im Spheronizer werden die zunächst zylinderförmigen Teilchen etwas gerundet.

Schließlich werden die Teilchen getrocknet. Dies geschieht bevorzugt in einem Wirbelschichttrockner, in dem erwärmte Luft von unten durch die Produktschicht geleitet wird. Die Luftmenge wird daher so eingestellt, dass die Teilchen fluidisiert werden und wirbeln. Durch den Wärmeübergang Luft/Teilchen wird das Wasser verdunstet. Da enzymhaltige Produkte sehr temperaturlabil sind, ist darauf zu achten, dass die Produkttemperatur nicht zu hoch ansteigt, d. h. in der Regel nicht über 50 °C, bevorzugt nicht über 40 bis 45 °C. Die Trocknung kann kontinuierlich und diskontinuierlich erfolgen.

Nach der Trocknung kann das Granulat noch mittels eines Siebes fraktioniert werden (optional). Grob- und Feingut können gemahlen und in den Mischer zum Anmaischen der Granuliermasse rückgeführt werden.

Granulierung und/oder Polymerbeschichtung können im Rahmen des erfindungsgemäßen Verfahrens kontinuierlich oder diskontinuierlich durchgeführt werden. Granulieren und Polymerbeschichtung können außerdem als getrennte Verfahrensschritte oder aneinander gekoppelt durchgeführt werden.

Gemäß einer ersten bevorzugten Ausführungsform des erfindungsgemäßen Verfahrens wird das Rohgranulat in einem Wirbelbett vorgelegt, verwirbelt und mit durch Aufsprühen einer wässrigen oder nichtwässrigen, vorzugsweise wässrigen, Lösung oder Dispersion des organischen Polymers beschichtet. Dazu verwendet man vorzugsweise eine möglichst hochkonzentrierte, noch sprühfähige Flüssigkeit, wie z. B. eine 10 bis 50 gew.-%ige wässrige oder nichtwässrige Lösung oder Dispersion wenigstens eines Polymers, das ausgewählt ist unter

a) Polyalkylenglykolen, mit einem zahlenmittleren Molekulargewicht von etwa 400 bis 15 000, wie z. B. etwa 400 bis 10 000;

b) Polyalkylenoxid-Polymeren oder -Copolymeren, mit einem zahlenmittleren Molekulargewicht von etwa 4 000 bis 20 000, wie z. B. etwa 7 700 bis 14 600; insbesondere Blockcopolymeren von Polyoxyethylen und Polyoxypropylen;

c) Polyvinylpyrrolidon mit einem zahlenmittleren Molekulargewicht von etwa 7 000 bis 1 000 000, wie z. B. etwa 44 000 bis 54 000;

d) Vinylpyrrolidon/Vinylacetat-Copolymeren mit einem zahlenmittleren Molekulargewicht von etwa 30 000 bis 100 000, wie z. B. etwa 45 000 bis 70 000;

e) Polyvinylalkohol mit einem zahlenmittleren Molekulargewicht von etwa 10 000 bis 200 000, wie z. B. etwa 20 000 bis 100 000; und

f) Hydroxypropylmethylcellulose mit einem zahlenmittleren Molekulargewicht von etwa 6 000 bis 80 000, wie z. B. etwa 12 000 bis 65 000.

Die Verwendung einer Beschichtung aus Polyethylenglycol, aufgebracht als Schmelze oder wässrige Lösung, ist auch hier ausgenommen.

Gemäß einer weiteren bevorzugten Verfahrensvariante verwendet man zur Beschichtung eine 10 bis 40 gew.-%ige, vorzugsweise etwa 20 bis 35 gew.-%ige, sprühfähige wässrige oder nichtwässrige Lösung oder Dispersion wenigstens eines Polymers, das ausgewählt ist unter:

g) Alkyl(meth)acrylat-Polymeren und -Copolymeren mit einem zahlenmittleren Molekulargewicht von etwa 100 000 bis 1 000 000; insbesondere Ethylacrylat/Methylmethacrylat-Copolymeren und Methylacrylat/Ethylacrylat-Copolymeren; und

h) Polyvinylacetat mit einem zahlenmittleren Molekulargewicht von etwa 250 000 bis 700 000, ggf. stabilisiert mit Polyvinylpyrrolidon.

Im Allgemeinen wird man wässrige Lösungen oder wässrige Dispersionen aus folgenden Gründen bevorzugen: Es sind keine besonderen Maßnahmen zur Aufarbeitung bzw. Rückgewinnung der Lösungsmittel notwendig; es sind keine besonderen Maßnahmen zum Explosionsschutz erforderlich; einige Beschichtungsmaterialien werden bevorzugt als wässrige Lösungen oder Dispersionen angeboten.

In Sonderfällen kann jedoch auch der Einsatz einer nichtwässrigen Lösung oder Dispersion von Vorteil sein. Das Coatingmaterial löst sich sehr gut bzw. es kann ein vorteilhaft großer Anteil des Coatingmaterials dispergiert werden. Auf diese Weise kann eine Sprühflüssigkeit mit höherem Feststoffanteil versprüht werden, was zu kürzeren Prozesszeiten führt. Die niedrigere Verdampfungsenthalpie des nichtwässrigen Lösungsmittels führt ebenfalls zu kürzeren Prozesszeiten.

Erfindungsgemäß brauchbare Dispersionen erhält man, indem man obige Polymere in einer wässrigen oder nichtwässrigen, vorzugsweise wässrigen Flüssigphase, gegebenenfalls unter Mitverwendung eines üblichen Dispergierhilfsmittels, dispergiert. Das Aufsprühen einer Polymerlösung oder Dispersion wird vorzugsweise so durchgeführt, dass man das Rohgranulat in einer Wirbelschichtapparatur oder einem Mischer vorlegt und unter gleichzeitigem Erwärmen der Vorlage das Sprühgut aufsprüht. Die Energiezufuhr erfolgt in der Wirbelschichtapparatur durch Kontakt mit erwärmtem Trocknungsgas, häufig Luft, im Mischer durch Kontakt mit der beheizten Wandung und gegebenenfalls mit beheizten Mischwerkzeugen. Eine Vorwärmung der Lösung oder Dispersion kann dann sinnvoll sein, wenn dadurch Sprühgut mit höherem Trockensubstanzanteil versprüht werden kann. Im Falle der Verwendung von organischen Flüssigphasen ist eine Lösungsmittelrückgewinnung zweckmäßig. Die Produkttemperatur während des Coatings sollte im Bereich von etwa 35 bis 50 °C liegen. Das Coating kann in der Wirbelschichtapparatur prinzipiell im Bottom-Spray-Verfahren (Düse sitzt im Anströmboden und sprüht nach oben) oder im Top-Spray-Verfahren (Coating wird von oben in die Wirbelschicht eingesprüht) durchgeführt werden.

Als Beispiele für geeignete Polyalkylenglycole a) sind zu nennen: Polypropylenglycole und insbesondere Polyethylenglycole unterschiedlicher Molmasse, wie z. B. PEG 4000 oder PEG 6000, erhältlich von der BASF AG unter den Handelsnamen Lutrol E 4000 und Lutrol E 6000.

Als Beispiele für obige Polymere b) sind zu nennen: Polyethylenoxide und Polypropylenoxide, Ethylenoxid/Propylenoxid-Mischpolymere sowie Blockcopolymere, aufgebaut aus Polyethylenoxid- und Polypropylenoxidblöcken, wie z. B. Polymere, die von der BASF AG unter der Handelsbezeichnung Lutrol F68 und Lutrol F127 erhältlich sind.

Von den Polymeren a) und b) können vorzugsweise hochkonzentrierte Lösungen von bis zu etwa 50 Gew.-%, wie z. B. etwa 30 bis 50 Gew.-%, bezogen auf das Gesamtgewicht der Lösung, vorteilhaft eingesetzt werden.

Als Beispiele für obige Polymere c) sind zu nennen: Polyvinylpyrrolidone, wie sie beispielsweise von der BASF AG unter dem Handelsnamen Kollidon oder Luviskol vertrieben werden. Von diesen Polymeren können hochkonzentrierte Lösungen mit einem Feststoffanteil von etwa 30 bis 40 Gew.-%, bezogen auf das Gesamtgewicht der Lösung, vorteilhaft eingesetzt werden.

Als Beispiel für oben genannte Polymere d) ist zu nennen: ein Vinylpyrrolidon/Vinylacetat-Copolymeres, welches von der BASF AG unter der Handelsbezeichnung Kollidon VA64 vertrieben wird. Von diesen Copolymeren können hochkonzentrierte Lösungen von etwa 30 bis 40 Gew.-%, bezogen auf das Gesamtgewicht der Lösung, besonders vorteilhaft eingesetzt werden.

Als Beispiel für obige Polymere e) sind zu nennen: Produkte, wie sie beispielsweise von der Fa. Hoechst unter der Handelsbezeichnung Mowiol vertrieben werden. Von diesen Polymeren können Lösungen mit einem Feststoffanteil im Bereich von etwa 8 bis 20 Gew.-% vorteilhaft eingesetzt werden.

Als Beispiele für geeignete Polymere f) sind zu nennen: Hydroxypropylmethylcellulosen, wie sie z. B. vertrieben werden von Shin Etsu unter dem Handelsnamen Pharmacoat.

Als Beispiele für oben genannte Polymere g) sind zu nennen: Alkyl(meth)acrylat-Polymere und -Copolymere, deren Alkylgruppe 1 bis 4 Kohlenstoffatome aufweist. Als konkrete Beispiele für geeignete Copolymere sind zu nennen: Ethylacrylat/Methylmethacrylat-Copolymere, welche beispielsweise unter den Handelsnamen Kollicoat EMM 30D von der BASF AG oder unter dem Handelsnamen Eutragit NE 30 D von der Fa. Röhm vertrieben werden; sowie Methacrylat/Ethylacrylat-Copolymere, wie sie beispielsweise unter dem Handelsnamen Kollicoat MAE 30DP von der BASF AG oder unter dem Handelsnamen Eutragit 30/55 von der Fa. Röhm vertrieben werden. Derartige Copolymere können beispielsweise als 10 bis 40 gew.-%ige Dispersionen erfindungsgemäß verarbeitet werden.

Als Beispiele für obige Polymere h) sind zu nennen: Polyvinylacetat-Dispersionen, welche mit Polyvinylpyrrolidon stabilisiert sind und beispielsweise unter der Handelsbezeichnung Kollicoat SR 30D von der BASF AG vertrieben werden (Feststoffgehalt der Dispersion etwa 20 bis 30 Gew.-%).

Gemäß einer zweiten bevorzugten Ausführungsform des erfindungsgemäßen Verfahrens wird das Rohgranulat in einem Wirbelbett vorgelegt und pulverbeschichtet. Die Pulverbeschichtung wird vorzugsweise mit einem Pulver eines festen Polymers durchgeführt, das ausgewählt ist unter Hydroxypropylmethylcellulosen (HPMC) mit einem zahlenmittleren Molekulargewicht von etwa 6 000 bis 80 000; im Gemisch mit einem Weichmacher. Für eine Pulverbeschichtung eignen sich auch alle anderen Coatingmaterialien, die pulverförmig vorliegen können und weder als Schmelze noch als hochkonzentrierte Lösung (z. B. der Fall bei HPMC) aufgetragen werden können.

Die Pulverbeschichtung wird vorzugsweise so durchgeführt, dass man das Coatingmaterial kontinuierlich dem im Wirbelbett vorgelegten Rohgranulat zudosiert. Die feinen Partikel des Coatingmaterials (Partikelgröße im Bereich von etwa 10 bis 100 μm) legen sich an die relativ rauhe Oberfläche des Rohgranulats. Durch Einsprühen einer Weichmacherlösung werden die Coatingmaterialteilchen miteinander verklebt. Beispiele für geeignete Weichmacher sind Polyethylenglycollösungen, Triethylcitrat, Sorbitlösungen, Paraffinöl und dergleichen. Zur Entfernung des Lösungsmittels erfolgt die Beschichtung unter leichtem Erwärmen. Die Produkttemperatur liegt dabei bei weniger als etwa 60 °C, wie z. B. bei etwa 40 bis 50 °C.

Prinzipiell kann die Pulverbeschichtung auch in einem Mischer durchgeführt werden. In diesem Fall wird das Pulvergemisch zudosiert und ebenfalls mit einer Düse der Weichmacher eingedüst. Die Trocknung erfolgt durch Zuführung von Energie über die Wand des Mischers und gegebenenfalls über die Rührwerkzeuge. Auch hier sind wie bei der Beschichtung und Trocknung im Wirbelbett niedrige Produkttemperaturen einzuhalten.

Gemäß einer dritten bevorzugten Ausführungsform des erfindungsgemäßen Verfahrens erfolgt die Beschichtung des in einem Wirbelbett oder Mischer vorgelegten Rohgranulats mittels einer Schmelze wenigstens eines Polymers, das ausgewählt ist unter

a) Polyalkylenglykolen, insbesondere Polyethylenglykolen, mit einem zahlenmittleren Molekulargewicht von etwa 1 000 bis 15 000; und

b) Polyalkylenoxid-Polymeren oder Copolymeren, mit einem zahlenmittleren Molekulargewicht von etwa 4 000 bis 20 000, insbesondere Blockcopolymeren von Polyoxyethylen und Polyoxypropylen.

Die Verwendung einer Beschichtung aus Polyethylenglycol, aufgebracht als Schmelze oder wässrige Lösung, ist auch hier ausgenommen.

Das Schmelzcoating in einer Wirbelschicht wird vorzugsweise so durchgeführt, dass man das zu coatende Granulat in der Wirbelschichtapparatur vorlegt. Das Coatingmaterial wird in einem externen Reservoir aufgeschmolzen und beispielsweise über eine beheizbare Leitung zur Sprühdüse gepumpt. Eine Erwärmung des Düsengases ist zweckmäßig. Sprührate und Eintrittstemperatur der Schmelze müssen so eingestellt werden, dass das Coatingmaterial noch gut auf der Oberfläche des Granulats verläuft und dieses gleichmäßig überzieht. Eine Vorwärmung des Granulats vor Einsprühung der Schmelzen ist möglich. Bei Coatingmaterialien mit hohem Schmelzpunkt muss beachtet werden, dass die Produkttemperatur nicht zu hoch eingestellt wird, um den Verlust an Enzymaktivität zu minimieren. Die Produkttemperatur sollte im Bereich von etwa 35 bis 50 °C liegen. Auch das Schmelzcoating kann im Prinzip nach dem Bottom-Spray-Verfahren oder nach dem Top-Spray-Verfahren durchgeführt werden. Das Schmelzcoating in einem Mischer kann auf zwei verschiedene Weisen durchgeführt werden. Entweder legt man das zu coatende Granulat in einem geeigneten Mischer vor und sprüht eine Schmelze des Coatingmaterials in den Mischer ein. Eine andere Möglichkeit besteht darin, das in fester Form vorliegende Coatingmaterial mit dem Produkt zu vermischen. Durch Zuführung von Energie über die Behälterwand oder über die Mischwerkzeuge wird das Coatingmaterial aufgeschmolzen und überzieht so das Rohgranulat. Je nach Bedarf kann von Zeit zu Zeit etwas Trennmittel zugegeben werden. Geeignete Trennmittel sind beispielsweise Kieselsäure, Talkum, Stearate und Tricalciumphosphat.

Der zur Beschichtung verwendeten Polymerlösung, -dispersion oder - schmelze können gegebenenfalls weitere Zusätze, wie z. B. mikrokistalline Cellulose, Talkum und Kaolin, zugesetzt werden.

Ein weiterer Gegenstand der Erfindung betrifft granulierte, polymerbeschichtete Futtermittelzusätze, umfassend eine feste granulierte Mischung aus einem futtermitteltauglichen Träger und wenigstens einem Enzym, beschichtet mit einem futtermitteltauglichen organischen Polymer, ausgewählt unter den oben beschriebenen Polymeren a) bis g).

Die erfindungsgemäßen Futtermittelzusätze besitzen vorzugsweise eine maximalen Korngröße von etwa 0,4 bis 2 mm, insbesondere von etwa 0,5 bis 1 mm.

Der Gewichtsanteil des Polymer-Coatings am Gesamtgewicht des beschichteten Futtermittelzusatzes liegt im Bereich von etwa 3 bis 25 Gew.-%, vorzugsweise 5 bis 20 Gew.-%, bezogen auf das Gesamtgewicht des fertigen Futtermittelzusatzes. Der Restfeuchtegehalt des polymerbeschichteten Futtermittelzusatzes wird in erster Linie von der Hygroskopizität des Polymermaterials bestimmt. Im Allgemeinen liegt der Restfeuchtegehalt im Bereich von etwa 1 bis 10 Gew.-%, wie z. B. 1 bis 5 Gew.-%, bezogen auf das Gesamtgewicht der beschichteten Granulate.

Der Enzymanteil am Gesamtgewicht des beschichteten Granulats liegt bei etwa 5 bis 30 Gew.-%.

Die erfindungsgemäßen Futtermittelzusätze enthalten wenigstens ein Enzym, das ausgewählt ist unter Oxidoreduktasen, Transferasen, Lyasen, Isomerasen, Ligasen und Hydrolasen.

Beispiele für Hydrolasen, d. h. Enzyme, welche eine hydrolytische Spaltung von chemischen Bindungen bewirken, sind Esterasen, Glycosidasen, Etherhydrolasen, Proteasen, Amidasen, Aminidasen, Nitrilasen und Phosphatasen. Glycosidasen umfassen sowohl Endo- als auch Exo-Glucosidasen, die sowohl $\alpha$- als auch $\beta$-glycosidische Bindungen spalten. Typische Beispiele hierfür sind Amylasen, Maltasen, Zellulasen, Endo-Xylanasen, $\beta$-Glucanasen, Mannanasen, Lysozyme, Galaktosidasen, $\beta$-Glucuronidasen und dergleichen. Bevorzugt sind insbesondere Nichtstärkepolysaccharid-spaltende Enzyme, wie z. B. Amylase, Glucanase, und Xylanase, sowie Phosphatasen, wie insbesondere Phytase. Besonders bevorzugte Futtermittelzusätze enthalten $1 \times 10^4$ bis $1 \times 10^5$ U Phytase pro Gramm Gesamtgewicht des Futtermittelzusatzes. 1 U Phytase ist dabei definiert als die Freisetzung von 1 Mikromol anorganischem Phosphat pro Minute aus einem Überschuß an Phytat.

Als futtermitteltaugliche Trägermaterialien können übliche inerte Träger verwendet werden. Ein "inerter" Träger darf keine negativen wechselwirkungen mit dem (den) Enzym(en) des erfindungsgemäßen Futterzusatzes zeigen, wie z. B. eine irreversible Inhibierung der Enzymaktivität bewirken, und muss für die Verwendung als Hilfsstoff in Futtermittelzusätzen unbedenklich sein. Als Beispiele für geeignete Trägermaterialien sind zu nennen: niedermolekulare anorganische oder organische Verbindungen sowie höher molekulare organische Verbindungen natürlichen oder synthetischen Ursprungs. Beispiele für geeignete niedermolekulare anorganische Träger sind Salze, wie Natriumchlorid, Calciumcarbonat, Natriumsulfat und Magnesiumsulfat. Beispiele für geeignete organische Träger sind insbesondere Zucker, wie z. B. Glucose, Fructose, Saccharose sowie Dextrine und Stärkeprodukte. Als Beispiele für höhermolekulare organische Träger sind zu nennen: Stärke- und Cellulosepräparate, wie insbesondere Maisstärke, oder Getreidemehle, wie z. B. Weizen-, Roggen-, Gersten- und Hafermehl oder Gemische davon. Das Trägermaterial ist in dem polymerbeschichteten Granulat, bezogen auf Trockenbasis, in einem Anteil von etwa 10 bis 85 Gew.-%, vorzugsweise etwa 50 bis 85 Gew.-%, enthalten.

Neben Enzym und Trägermaterial können weitere Zusätze im Granulat enthalten sein, wie z. B. als Enzymstabilisatoren wirkende anorganische Salze mit zweiwertigen Kationen, wie beispielsweise Zinksulfat, Magnesiumsulfat und Calciumsulfat in einem Anteil von etwa 0,5 bis 10 Gew.-%, vorzugsweise etwa 0,5 bis 5 Gew.-%. Außerdem können im Granulat weitere ernährungsrelevante Zusätze, wie z. B. Vitamine (beispielsweise Vitamine A, $B_1$, $B_2$, $B_6$, $B_{12}$, $D_3$, E, $K_3$ und dergleichen) oder Spurenelemente (wie z. B. Mangan, Eisen, Kupfer, Zink, Iod, Selen in Form geeigneter Salze), vorliegen. Der Gesamtanteil solcher Zusätze kann beispielsweise im Bereich von 1 bis 10 Gew.-%, bezogen auf das Trockengewicht des beschichteten Granulats, liegen.

Sollten die Klebeeigenschaften des eingesetzten Enzyms nicht ausreichen, um ein mechanisch stabiles Rohgranulat zu erzeugen, so ist die Verwendung von Bindemitteln als zusätzliche Granulierhilfsmittel von Vorteil. Als Beispiele für geeignete Bindemittel sind zu nennen: Lösungen von Kohlehydraten, wie z. B. Glucose, Saccharose, Dextrine und dergleichen, Zuckeralkohole, wie z. B. Mannit, oder Polymerlösungen, wie beispielsweise Lösungen von Hydroxypropylmethylcellulose (HPMC), Polyvinylpyrrolidon (PVP), ethoxilierte Cellulose (EC), Ethylcellulose oder Propylcellulose. Der Bindemittelanteil, bezogen auf das Trockengewicht des beschichteten Granulats, liegt beispielsweise im Bereich von etwa 0 bis 20 Gew.-%, wie z. B. 1 bis 6 Gew.-%, je nach Art und Klebeeigenschaften des verwendeten Bindemittels.

Ein weiterer Gegenstand der Erfindung betrifft pelletierte Futtermittelzusammensetzungen, welche neben üblichen Bestandteilen wenigstens einen Futtermittelzusatz gemäß obiger Definition als Beimischung enthalten.

Schließlich betrifft die Erfindung auch die Verwendung eines Futtermittelzusatzes nach obiger Definition zur Herstellung von pelletierten Futtermittelzusammensetzungen.

Zur Herstellung der pelletierten Futtermittelzusammensetzungen werden die erfindungsgemäß hergestellten beschichteten Enzymgranulate mit üblichem Tierfutter (wie z. B. Schweinemastfutter) vermischt. Der Enzymgranulatanteil wird so gewählt, dass der Enzymgehalt z. B. im Bereich von 10 bis 1.000 ppm liegt. Anschließend wird das Futter mit Hilfe einer geeigneten Pelletpresse pelletiert. Dazu wird das Futtergemisch üblicherweise durch Dampfeinleitung konditioniert und anschließend durch eine Matrize gepresst. Je nach Matrize können so Pellets von etwa 2 bis 12 mm Durchmesser hergestellt werden. Die höchste Prozesstemperatur tritt dabei beim Pressen des Gemisches durch die Matrize auf. Hier können Temperaturen im Bereich von etwa 60 bis 100 °C erreicht werden.

Die vorliegende Erfindung wird nun an Hand der folgenden nicht limitierenden Beispiele und der beiliegenden Figuren näher erläutert.

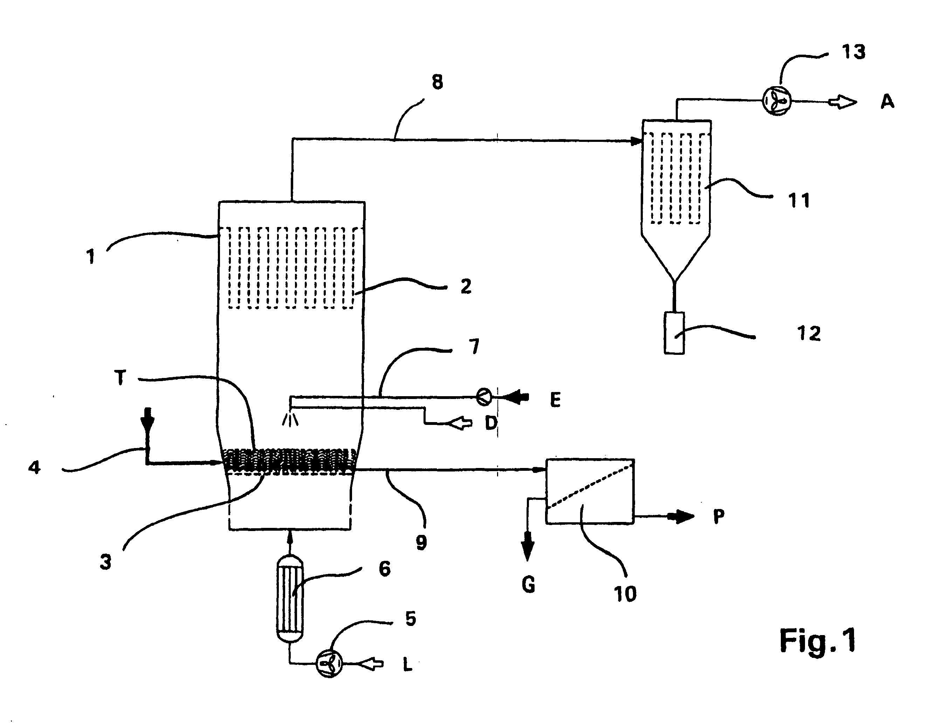

In Figur 1 ist schematisch eine Wirbelbetttrockner-Anlage zur diskontinuierlichen Herstellung eines polymerbeschichteten Granulats gezeigt. In einen Wirbelbetttrockner 1, versehen mit einem Innenfilter 2 und einem Lochboden 3, wird von unten mit Hilfe des Gebläses 5 Luft L, die durch die Heizung 6 vorgewärmt wurde, eingeleitet. Über die Produktaufgabe 4 wird eine Füllung sphäronisiertes, getrocknetes Rohgranulat T zu Beginn des Prozesses in den Wirbelbetttrockner 1 vorgelegt und durch die vorgewärmte Luft verwirbelt. Auf das so gebildete Wirbelbett wird Polymerlösung E über die Sprühvorrichtung 7 mit Hilfe von Druckluft D in den Wirbelbetttrockner oberhalb des Wirbelbettes eingesprüht. Sobald die gewünschte Menge eingesprüht ist, wird die zufuhr von Polymerlösung E unterbrochen, das Rohprodukt gegebenenfalls im Wirbelbett nachgetrocknet und über den Produktaustrag 9 aus dem Wirbelbetttrockner 1 in die Siebvorrichtung 10 geleitet, wo es in Grobgut G und Produkt P mit der gewünschten Korngröße aufgetrennt wird. Die Prozessabluft A wird nach Durchtritt durch den Innenfilter 2 über die Ableitung 8 zum Abluftfilter 11 geleitet, dort von Feinstteilen befreit, welche im Behälter 12 gesammelt werden, und wird über das Gebläse 13 aus der Anlage entfernt.

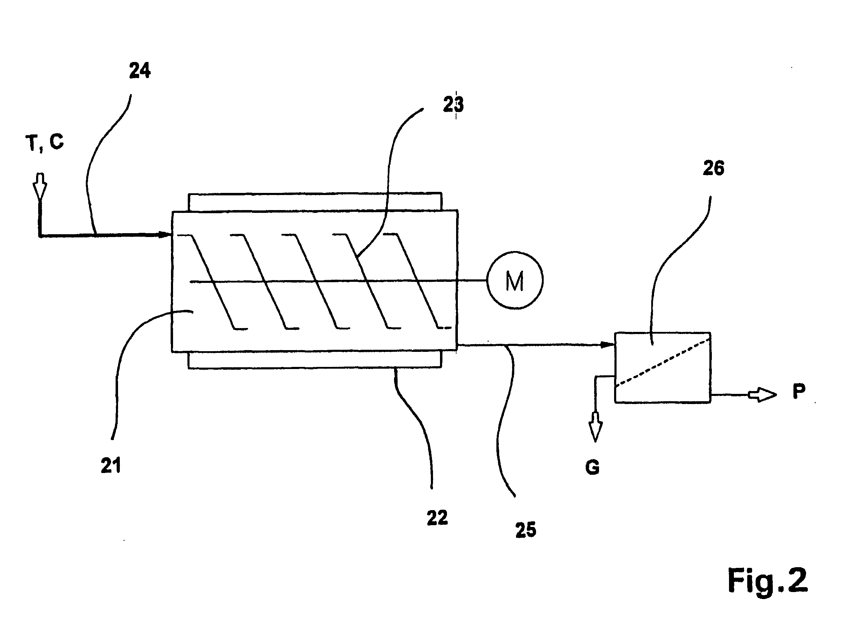

Figur 2 zeigt schematisch eine diskontinuierliche Mischvorrichtung zur Herstellung polymerbeschichteter Granulate. In einen Mischer 21, der mit einem Heizmantel 22 und einem über den Motor M angetriebenen Rührwerk 23 versehen ist, wird über die Produktaufgabe 24 Rohgranulat T sowie festes Coatingmaterial C gleichzeitig oder zeitlich versetzt eingeleitet. Mit Hilfe des Heizmantels 22 wird der Mischer soweit erwärmt, dass das Coatingmaterial schmilzt und auf dem Granulat eine gleichmäßige Beschichtung ausbildet. Nach Ausbildung der Polymerbeschichtung wird durch Verringerung der Heizleistung die Temperatur im Mischer so weit verringert, dass die Polymerbeschichtung verfestigt. Anschließend wird das Rohprodukt über den Produktaustrag 25 zum Sieb 26 geleitet, wo es in Grobgut G und Produkt P mit der gewünschten Korngröße aufgetrennt wird.

Beispiel 1

Wirbelbettcoating mit wässriger Polyvinylalkohol-Lösung

Bei dem zu coatenden Produkt handelte es sich um ein phytasehaltiges Granulat mit einem Restfeuchtegehalt von 6 bis 7 % und einer Aktivität von ca. 6500 U/g. Die Granulate hatten eine Korngröße von maximal 850 µm und eine mittlere Partikelgröße von 550 µm (Siebanalyse).

Als Coatingmaterial wurde Polyvinylalkohol (PVA) der Fa. Hoechst (Charge-Nr. 601 B4 1153; Handelsname Mowiol 8/88) mit einem Restfeuchtegehalt von < 1 % verwendet. Für die Versuchsdurchführung wurde ein Laborwirbelbett Aeromat Typ MP-1 der Fa. Niro-Aeromatic verwendet. Als Vorlagegefäß wurde ein Kunststoffkonus mit einem Anströmboden-Durchmesser von 170 mm und ein Lochboden mit 12 % freier Fläche eingesetzt.

Das im Wirbelbett vorgelegte Enzymgranulat (700 g) wurde unter Wirbeln mit einer Zulufttemperatur von 45 bis 55 °C und Zuluftmenge von 50 m³/h auf 45 °C Produkttemperatur erwärmt. Der Polyvinylalkohol (78 g) wurde in einem Becherglas bei Raumtemperatur unter Rühren in VE-Wasser (702 g) gelöst. Da als Lösung aufgesprühter Polyvinylalkohol starke Verklebungseigenschaften zeigt, wurde Talkum eingeschlemmt (15,6 g entsprechend 20 %, bezogen auf PVA), um diese Eigenschaft zu verringern. Die so erhaltene Talkum-Dispersion wurde auf einem Magnetrührer 30 min gerührt, um sie zu homogenisieren und das Talkum feinst zu verteilen, und ein Verstopfen der Düse zu vermeiden. Die Dispersion wurde zum Versprühen auf 35 °C erwärmt, um die Viskosität abzusenken, wodurch die Herstellung eines feineren Sprühfilms ermöglicht wurde. Wegen der starken Filmbildung wurde die Sprührate nur auf 1 - 2 g/min eingestellt. Die Dispersion wurde mit einer Membranpumpe gefördert und bei 1,5 - 2 bar Sprühdruck im Topsprayverfahren mittels einer Zweistoffdüse (1,2 mm) auf das Enzymgranulat aufgesprüht. Während des Sprühens wurde die Zuluftmenge schrittweise auf 140 m$^3$/h erhöht, um die Wirbelung aufrecht zu erhalten. Durch die erwärmte Zuluft wurde das Wasser der Coatinglösung verdunstet und der Polyvinylalkohol legte sich als Schutzhülle (Coating) um die Granulatpartikel. Die Sprühdauer betrug 540 min, wobei die Produkttemperatur 45 °C und die Zulufttemperatur 45 bis 52 °C betrug. Anschließend wurde das Produkt bei 45 °C Produkttemperatur 25 min getrocknet, wobei die Zuluftmenge wieder auf 100 m$^3$/h abgesenkt wurde, um den Abrieb der Coatinghülle möglichst gering zu halten. Das Produkt wurde unter Wirbeln auf 30 °C Produkttemperatur abgekühlt.

Man erhielt ein Produkt mit folgenden Kenndaten:

| | |
|---|---|
| Restfeuchte | 4 % |
| Phytase-Aktivität | ca. 6 000 U/g |
| Aussehen (Mikroskop) | Partikel mit relativ rauher Oberfläche, geschlossene Hülle. |

Beispiel 2

Wirbelbettcoating mit einer wässrigen Polyethylenglycol 6000-Lösung

Bei dem zu coatenden Produkt handelte es sich um ein phytasehaltiges Granulat mit einem Restfeuchtegehalt von 6 bis 7 % und einer Aktivität von ca. 6 500 U/g. Die Granulate hatten eine Korngröße von maximal 850 μm und eine mittlere Partikelgröße von 570 μm (Siebanalyse).

Als Coatingmaterial wurde Polyethylenglycol 6000 der Fa. SERVA (Lot. 09515, Restfeuchtegehalt von < 1 %) verwendet. Für die Versuchsdurchführung wurde ein Laborwirbelbett Aeromat Typ MP-1 der Fa. Niro-Aeromatic verwendet. Als Vorlagegefäß wurde ein Kunststoffkonus mit einem Anströmboden-Durchmesser von 110 mm und ein Lochboden mit 12 % freier Fläche eingesetzt.

Das im Wirbelbett vorgelegte Enzymgranulat (700 g) wurde unter Wirbeln mit einer Zulufttemperatur von 60 °C und Zuluftmenge von 30 m$^3$/h auf 40 °C Produkttemperatur erwärmt. Das Polyethylenglycol (78.3 g) wurde in einem Becherglas bei Raumtemperatur unter Rühren in VE-Wasser (77,7 g) gelöst und bei 1,5 bar Sprühdruck im Topsprayverfahren mittels einer Zweistoffdüse (1 mm) auf das Enzymgranulat aufgesprüht. Während des Sprühens wurde die Zuluftmenge schrittweise auf 50 m$^3$/h erhöht, um die Wirbelung aufrecht zu erhalten. Durch die erwärmte Zuluft wird das Wasser der Coatinglösung verdunstet und das Polyethylenglycol legte sich als Schutzhülle um die Granulatpartikel. Die Sprühdauer betrug 14 min, wobei die Produkttemperatur auf 40 °C gehalten wurde und die Zulufttemperatur ca. 60 °C betrug. Anschließend wurde das Produkt bei 40 °C Produkttemperatur 60 min getrocknet, wobei die Zuluftmenge wieder schrittweise auf 40 m$^3$/h abgesenkt wurde, um einen Abrieb der Coatinghülle möglichst gering zu halten. Das Produkt wurde unter Wirbeln auf 30 °C Produkttemperatur abgekühlt.

Man erhielt ein Produkt mit folgenden Kenndaten:

| | |
|---|---|
| Restfeuchte | 4 bis 5 % |
| Phytase-Aktivität | ca. 6 000 U/g |
| Aussehen (Mikroskop) | Partikel mit relativ glatter Oberfläche, geschlossene Hülle. |

Beispiel 3

Wirbelbettcoating mit einer Polyethylenglycol 6000-Schmelze

Bei dem zu coatenden Produkt handelte es sich um ein phytasehaltiges Granulat mit einem Restfeuchtegehalt von 6 bis 7 % und einer Aktivität von ca. 6 500 U/g. Die Granulate hatten eine Korngröße von maximal 850 μm und eine mittlere Partikelgröße von 600 μm (Siebanalyse).

Als Coatingmaterial wurde Polyethylenglycol 6000 der Fa. SERVA (Lot. 09515, Restfeuchtegehalt von < 1 %), verwendet. Für die Versuchsdurchführung wurde ein Laborwirbelbett Aeromat Typ MP-1 der Fa. Niro-Aeromatic verwendet. Als vorlagegefäß wurde ein Kunststoffkonus mit einem Anströmboden-Durchmesser von 110 mm und ein Lochboden mit 12 % freier Fläche eingesetzt.

Das im Wirbelbett vorgelegte Enzymgranulat (700 g) wurde unter Wirbeln mit einer Luftmenge von 30 m$^3$/h auf 40 °C Produkttemperatur erwärmt. Das Polyethylenglycol ( 78,3 g) wurde im Becherglas in einem Ölbad bei 120 °C aufgeschmolzen und bei 2,5 bar Sprühdruck mit beheiztem Sprühgas von 80 bis 95 °C mittels einer Zweistoffdüse (1 mm) im Topsprayverfahren auf das Enzymgranulat aufgesprüht. Während des Sprühens wurde das Coatingmaterial und die Einsaugleitung auf 100 bis 120 °C beheizt, um einen feinen Sprühnebel zu erhalten, so dass sich eine gleichmäßige Coatingschicht um die Partikel bildet und diese geschlossen umhüllt. Die Sprühdauer betrug 12 min, wobei die Produkttemperatur auf 40 °C gehalten wurde und die Zuluft 35 bis 40 °C betrug. Anschließend wurde das Produkt in 50 min unter wirbeln bei 30 m$^3$/h Zuluft auf 30 °C abgekühlt.

Man erhielt ein Produkt mit folgenden Kenndaten:

| Restfeuchte | 4% |
|---|---|
| Phytase-Aktivität | ca. 6 000 U/g |
| Aussehen (Mikroskop) | Partikel mit glatter Oberfläche. |

Beispiel 4

Wirbelbettcoating mit einer Schmelze eines Polyoxyethylen-Polyoxypropylen-Blockpolymeren

Bei dem zu coatenden Produkt handelte es sich um ein phytasehaltiges Granulat mit einem Restfeuchtegehalt von 6 bis 7 % und einer Aktivität von ca. 6 500 U/g. Die Granulate hatten eine Korngröße von maximal 850 μm und eine mittlere Partikelgröße von 600 μm (Siebanalyse).

Als Coatingmaterial wurde Lutrol F68 (Polyoxyethylen-Polyoxypropylen Blockpolymer, BASF Lot. 70 - 0243, mit einem Restfeuchtegehalt von < 1 %) verwendet. Für die Versuchsdurchführung wurde ein Wirbelbett Typ GPCG5 mit einem Behältervolumen von 20 l mit einer Zweistoffdüse (1,5 mm) und als Einsatz ein Boden-Typ PZ 100 μm verwendet.

Das im Wirbelbett vorgelegte Enzymgranulat (5 kg) wurde unter Wirbeln mit einer Luftmenge von 30 m$^3$/h auf 43 °C Produkttemperatur erwärmt. Das Lutrol F68 (1 kg) wurde als Schmelze (120 °C) mit beheiztem Sprühgas von 100 °C und 3 bar auf das Enzymgranulat aufgesprüht. Während des Sprühprozesses wurde die Luftmenge auf 50 m$^3$/h erhöht, um die Wirbelschichthöhe zu halten. Die Sprühdauer betrug 64 min, wobei die Produkttemperatur 43 bis 48 °C und die Zulufttemperatur 44 bis 45 °C betrug. Anschließend wurde das Produkt unter Wirbeln bei 45 m$^3$/h Zuluft auf 26 °C abgekühlt.

Man erhielt ein Produkt mit folgenden Kenndaten:

| Restfeuchte | 5-7% |
|---|---|
| Phytase-Aktivität | ca. 5 400 U/g |
| Aussehen (Mikroskop) | Partikel mit glatter, tropfenartiger Oberfläche |

Vergleichsbeispiel 1

Wirbelbettcoating mit einer Fett-Schmelze

Bei dem zu coatenden Produkt handelte es sich um phytasehaltiges Granulat mit einem Restfeuchtegehalt von 6 bis 7 % und einer Aktivität von ca. 6 500 U/g. Die Granulate hatten eine Korngröße von maximal 850 μm und eine mittlere Partikelgröße von 700 μm (Siebanalyse).

Als Coatingmaterial wurde Fett (gehärteter Rindertalg der Fa. Henkel, EDENOR NHTI-G CAS-NR. 67701-27-3, mit einem Restfeuchtegehalt von < 1 %) verwendet. Für die Versuchsdurchführung wurde ein Laborwirbelbett Aeromat Typ MP-1 der Fa. Niro-Aeromatic verwendet. Als Vorlagegefäß wurde ein Metallkonus mit einem Anströmboden-Durchmesser von 110 mm und ein Lochboden mit 12 % freier Fläche eingesetzt.

Das im Wirbelbett vorgelegte Enzymgranulat (750 g) wurde unter Wirbeln mit einer Luftmenge von 50 m$^3$/h auf 45 °C Produkttemperatur erwärmt. Das Fett (321 g) wurde im Becherglas in einem Ölbad bei 100 °C aufgeschmolzen und bei 3 bar Sprühdruck mit beheiztem Sprühgas von 85 -90 °C durch Unterdruckeinsaugung über eine beheizte Leitung im Topsprayverfahren mit einer 1 mm Zweistoffdüse auf das Enzymgranulat aufgesprüht. Während des Sprühens wird das Coatingmaterial und die Einsaugleitung auf 100 bis 120 °C beheizt, um einen feinen Sprühnebel zu erhalten, damit sich eine gleichmäßige Coatingschicht um die Partikel bildet und diese geschlossen umhüllt. Während des Sprühprozesses wurde die Luftmenge auf 60 m$^3$/h erhöht, um die Wirbelschichthöhe zu halten. Die Sprühdauer betrug 15 min, wobei die Produkttemperatur 45 bis 48 °C und die Zulufttemperatur ca. 45 °C betrug. Anschließend wurde das Produkt unter Wirbeln bei 50 m$^3$/h Zuluft auf 30 °C abgekühlt.

Man erhielt ein Produkt mit folgenden Kenndaten:

| Restfeuchte | 6 - 8% |
|---|---|

(fortgesetzt)

| Phytase-Aktivität | ca. 5 500 U/g |
|---|---|
| Aussehen (Mikroskop) | Partikel mit glatter Oberfläche, geschlossene Hülle. |

Beispiel 5

Wirbelbettcoating mit einer wässrigen Dispersion von Polyvinylacetat

Bei dem zu coatenden Produkt handelte es sich um ein phytasehaltiges Granulat mit einem Restfeuchtegehalt von 6 bis 7 % und einer Aktivität von ca. 6 500 U/g. Die Granulate hatten eine Korngröße von maximal 850 µm und eine mittlere Partikelgröße von 570 µm (Siebanalyse).

Als Coatingmaterial wurde eine Polyvinylacetat-Dispersion, stabilisiert mit Polyvinylpyrrolidon (Kollicoat SR 3OD, BASF Prod. Nr. 201076, Lot. 18 - 0847 mit einem Feststoffgehalt von 30 %) verwendet. Als Coatingzusatz wurde Mikrokristalline Cellulose AVICEL PH 105 Lot. 00587 der Fa. SERVA eingesetzt. Für die Versuchsdurchführung wurde ein Laborwirbelbett Aeromat Typ MP-1 der Fa. Niro-Aeromatic verwendet. Als Vorlagegefäß wurde ein Kunststoffkonus mit einem Anströmboden-Durchmesser von 170 mm und ein Lochboden mit 16 % freier Fläche eingesetzt.

Das im Wirbelbett vorgelegte Enzymgranulat (700 g) wurde bei Raumtemperatur mit einer Zuluftmenge von 35 m³/h gewirbelt. Es wurde eine Dispersion aus AVICEL PH 105 (97,9 g) und VE-Wasser (310 g) unter 30-minütigem Rühren bei Raumtemperatur in einem Becherglas hergestellt und diese in die Kollicoat-Dispersion (467 g) eingerührt. Dieses Dispersionsgemisch wurde mit einer Zweistoffdüse (1,2 mm) bei einer Zulufttemperatur von 35 °C, Zuluftmenge von 45 m³/h, bei 1,5 bar durch Förderung mit einer Membranpumpe auf das Enzymgranulat aufgesprüht. Die Produkttemperatur betrug während des Sprühens 17 bis 20 °C. Die Dispersion wurde im Topsprayverfahren auf das Enzymgranulat aufgesprüht. Dabei verdunstet das Wasser der Coatinglösung und die Kollicoatpartikel umhüllen die Granulatteilchen und verkleben auf deren Oberfläche (Coating). Um die starken Verklebungseigenschaften (Filmbildung) von Kollicoat zu mildern, wurde Mikrokristalline Cellulose zugesetzt. Während des Sprühens wurde die Zuluftmenge schrittweise auf 65 m³/h erhöht, um die Wirbelung aufrecht zu erhalten. Die Sprühdauer betrug 43 min. Anschließend wurde das Produkt bei 20 bis 26 °C Produkttemperatur 80 min getrocknet, wobei die Zuluftmenge auf 55 m³/h abgesenkt wurde, um ein Abrieb der Coatinghülle möglichst gering zu halten.

Man erhielt ein Produkt mit folgenden Kenndaten:

| Restfeuchte | 7 % |
|---|---|
| Phytase-Aktivität | ca. 4 700 U/g |
| Aussehen (Mikroskop) | Partikel mit glatter Oberfläche, geschlossene Hülle. |

Beispiel 6

Mischercoating mit einer Polyethylenglycol 6000-Schmelze

Bei dem zu coatenden Produkt handelte es sich um ein phytasehaltiges Granulat mit einem Restfeuchtegehalt von 6 bis 7 % und einer Aktivität von ca. 6 500 U/g. Die Granulate hatten eine Korngröße von maximal 850 µm und eine mittlere Partikelgröße von ca. 600 µm (Siebanalyse). Als Coatingmaterial wurde Polyethylenglycol 6000 der Fa. SERVA (Lot. 09515 mit einem Restfeuchtegehalt von < 1 %) verwendet. Für die Versuchsdurchführung wurde ein Lödigemischer Typ M 5 R mit Pflugscharen und 5 l Fassungsvermögen verwendet.

Das im Mischer vorgelegte Enzymgranulat (700 g) wurde unter Mischen von 170 U/min auf 56 °C temperiert. Anschließend wurde ein Teil der 100 °C heißen Polyethylenglycolschmelze dazugegeben, bis das Produkt anfing zu verkleben. Durch Kühlen über die Behälterwand wurde die Produkttemperatur bei 50 bis 54 °C gehalten, bis die Masse homogen war. Ab 50 °C zerfielen die Verklebungen wieder und die restliche Schmelze (Gesamtmenge 233 g) wurde zugegeben. Beim langsamen Abkühlen des Produktes erstarrte das Polyethylenglycol und umschloss die Partikel vollständig. Das gecoatete Produkt wurde bei 48 bis 46 °C 5 Minuten bei 220 U/min nachgemischt und dann bei gleicher Rührgeschwindigkeit auf 36 °C abgekühlt.

Man erhielt ein Produkt mit folgenden Kenndaten:

| Restfeuchte | 2 bis 3 % |
|---|---|
| Phytase-Aktivität | ca. 5 000 U/g |
| Aussehen (Mikroskop) | Partikel mit glatter Oberfläche |

Vergleichsbeispiel 2

Mischercoating mit einer Fett-Schmelze

Bei dem zu coatenden Produkt handelte es sich um ein phytasehaltiges Granulat mit einem Restfeuchtegehalt von 6 bis 8 % und einer Aktivität von ca. 6 500 U/g. Die Granulate hatten eine Korngröße von maximal 850 µm und eine mittlere Partikelgröße von 600 µm (Siebanalyse).
Als Coatingmaterial wurde Fett (gehärteter Rindertalg der Fa. Henkel, EDENOR HTI-G CAS-NR. 67701-03-5 mit einem Restfeuchtegehalt von < 1 %) verwendet. Für die Versuchsdurchführung wurde ein Lödigemischer Typ M 5 R mit Pflugscharen und 5 l Fassungsvermögen verwendet.
Das im Mischer vorgelegte Enzymgranulat (700 g) wurde mit dem Fett (175 g) unter Mischen bei 170 U/min auf 55 °C temperiert. Das Fett begann bei 51 °C zu schmelzen und legte sich als Film um die Granulate. Ab 55 °C begann das Produkt zu verkleben. Durch Kühlen über die Behälterwand wurde die Produkttemperatur langsam abgesenkt, wobei das Fett wieder erstarrte und die Partikel mit einer Schutzhülle umschloss. Beim Erstarren des Fettes wurde die Drehzahl auf 220 U/min erhöht, so dass die Verklebungen zerfielen, bevor das Produkt eine Temperatur von 36 °C erreicht hatte.
Man erhielt ein Produkt mit folgenden Kenndaten:

| Restfeuchte | 6 bis 8 % |
|---|---|
| Phytase-Aktivität | ca. 6 200 U/g |
| Aussehen (Mikroskop) | Partikel mit sehr glatter, geschlossener Oberfläche. |

Versuch 1: Bestimmung der Pelletierstabilität

Zur Beurteilung der Stabilität der Futtermittelenzyme beim Pelletieren wurde eine Standardpelletierung festgelegt. Dazu wird zur Verbesserung der analytischen Gehaltsbestimmungen die Dosierung im Futter erhöht. Die Pelletierung wird so gefahren, dass stets eine Pellettemperatur von 80 bis 85 °C erreicht wird. Vom pelletierten Futter wird die Aktivität des Enzyms im Vergleich zur Ausgangsaktivität bestimmt. Gegebenenfalls nach Korrektur um den Gehalt an Enzym, der nativ vorhanden ist, kann die Retention berechnet werden. Zur Kontrolle wird stets eine "Standardprobe" mitpelletiert und entsprechend analysiert.
Die Analysenmethode für Phytase ist in verschiedenen Veröffentlichungen beschrieben: Simple and Rapid Determination of Phytase Activity, Engelen et al., Journal of AOAC International, Vol. 77, No. 3, 1994; Phytase Activity, General Tests and Assays, Food Chemicals Codex (FCC), IV, 1996, p. 808-810; Bestimmung der Phytaseaktivität in Enzymstandardmaterialien und Enzympräparaten VDLUFA-Methodenbuch, Band III, 4. Erg. 1997; oder Bestimmung der Phytaseaktivität in Futtermitteln und Vormischungen VDLUFA-Methodenbuch, Band III, 4. Erg. 1997.
Als Futter wird stets ein "Standardfutter" mit folgender Zusammensetzung eingesetzt:

| | |
|---|---|
| Mais | 20,7 % |
| Gerste | 40,0 % |
| Manjok | 10,0 % |
| Hafer | 13,0 % |
| Soja | 3,0 % |
| Fischmehl | 3,0 % |
| Weizengrießkleie | 0,84 % |
| Sojaöl | 0,5 % |
| Kalk | 1,2 % |
| Salze | 0,2 % |
| Spurenelemente | 0,06 % |
| Methionin | 0,05 % |
| Cholinchlorid (50 %) | 0,05 % |
| Ca-Propionat | 0,4 % |
| | 100 % |

Die in obigen Beispielen hergestellten gecoateten Granulate wurden mit obigem Standardfutter vermischt (Anteil 500 ppm), pelletiert und auf relative Verbesserung der Retention der Enzymaktivität analysiert. Die Ergebnisse sind in folgender Tabelle 1 zusammengefasst.

Tabelle 1:

| Erzielte Pelletierstabilität durch Coating-Übersicht | | | | | |
|---|---|---|---|---|---|
| Bsp. Nr. | Coating-Substanz | Typ | Coating-anteil [%][1] | Pelletier-temperatur [°C] | rel. Verbesserung der Retention [%][2] |
| 1 | PVA | L | 9,5 | 85 | 19/66 |
| 2 | PEG 6000 | L | 10 | 84 | 15/71 |
| 3 | PEG 6000 | S | 10 | 84 | 15/74 |
| 4 | F68 | S | 16 | 85 | 23/73 |
| V1 | Fett | S | 30 | 80 | 24/74 |
| 5 | SR 30 D | D | 25 | 84 | 30/82 |
| 6 | PEG 6000 | S | 25 | 80 | 26/67 |
| V2 | Fett | S | 20 | 80 | 25/79 |

L: Lösung, S: Schmelze, D: Dispersion

[1] Gew.-%

[2] rel. Verbesserung der Retention der Enzymaktivität nach Pelletierung: [(Retention mit Coating - Retention ohne Coating) : Retention ohne Coating] • 100 / Retention mit Coating

Berechnungsbeispiel:

Retention mit Coating: 66 %; Retention ohne Coating: 55,5 %.

Rechnung:          ((66 - 55,5) : 55,5) • 100 = 19;

Angabe in der Tabelle 1:       19/66

**Patentansprüche**

1.  Verfahren zur Erhöhung der Pelletierstabilität eines granulierten, enzymhaltigen Futtermittelzusatzes, wobei man

    (1) ein Gemisch umfassend einen futtermitteltauglichen Träger und wenigstens ein Enzym zu einem Rohgranulat verarbeitet;

    (2) das Rohgranulat mit einem futtermitteltauglichen organischen Polymer beschichtet, indem man das Rohgranulat

    (2a) in einem Wirbelbett mit einer Schmelze, einer Lösung oder einer Dispersion des organischen Polymers besprüht oder in einem Wirbelbett eine Pulverbeschichtung mit dem organischen Polymer durchführt; oder

    (2b) in einem Mischer mit einer Schmelze, einer Lösung oder einer Dispersion des organischen Polymers beschichtet oder eine Pulverbeschichtung mit dem organischen Polymer durchführt;

    und das jeweils erhaltene polymerbeschichtete Granulat gegebenenfalls nachtrocknet, abkühlt und/oder von Grobanteilen befreit, wobei eine Beschichtung aus Polyethylenglycol, aufgebracht als Schmelze oder wässrige Lösung, ausgenommen ist.

2.  Verfahren nach Anspruch 1, **dadurch gekennzeichnet, dass** man ein Gemisch, umfassend den futtermitteltauglichen Träger und eine Lösung wenigstens eines Enzyms durch Extrusion, Mischergranulation, Wirbelschichtgranulation, Telleragglomeration oder Kompaktierung zu einem Rohgranulat verarbeitet.

3.  Verfahren nach einem der vorhergehenden Ansprüche, **dadurch gekennzeichnet, dass** man das feuchte Rohgranulat vor Durchführung der Polymerbeschichtung sphäronisiert.

4. Verfahren nach einem der vorhergehenden Ansprüche, **dadurch gekennzeichnet, dass** man die Granulierung und/oder Polymerbeschichtung kontinuierlich oder diskontinuierlich durchführt.

5. Verfahren nach einem der vorhergehenden Ansprüche, **dadurch gekennzeichnet, dass** das Rohgranulat eine enge Korngrößenverteilung aufweist.

6. Verfahren nach einem der vorhergehenden Ansprüche, **dadurch gekennzeichnet, dass** man das Rohgranulat mit einer wässrigen oder nichtwässrigen Lösung oder Dispersion des organischen Polymers beschichtet.

7. Verfahren nach Anspruch 6, **dadurch gekennzeichnet, dass** man zur Beschichtung eine 10 bis 50 gew.-%ige wässrige oder nicht wässrige Lösung wenigstens eines Polymers einsetzt, das ausgewählt ist unter

    a) Polyalkylenglykolen, insbesondere Polyethylenglykolen, mit einem zahlenmittleren Molekulargewicht von 400 bis 15 000;

    b) Polyalkylenoxid-Polymeren oder -Copolymeren, mit einem zahlenmittleren Molekulargewicht von 4 000 bis 20 000, insbesondere Blockcopolymeren von Polyoxyethylen und Polyoxypropylen;

    c) Polyvinylpyrrolidon mit einem zahlenmittleren Molekulargewicht von 7 000 bis 1 000 000;

    d) Vinylpyrrolidon/Vinylacetat-Copolymeren mit einem zahlenmittleren Molekulargewicht von etwa 30 000 bis 100 000;

    e) Polyvinylalkohol mit einem zahlenmittleren Molekulargewicht von 20 000 bis 100 000; und

    f) Hydroxypropylmethylcellulose mit einem zahlenmittleren Molekulargewicht von 6 000 bis 80 000;

wobei eine Beschichtung aus Polyethylenglycol, aufgebracht als wässrige Lösung, ausgenommen ist.

8. Verfahren nach Anspruch 6, **dadurch gekennzeichnet, dass** man zur Beschichtung eine 10 bis 40 gew.-%ige wässrige oder nichtwässrige Dispersion oder Lösung wenigstens eines Polymers einsetzt, das ausgewählt ist unter:

    a) Alkyl(meth)acrylat-Polymeren und -Copolymeren mit einem zahlenmittleren Molekulargewicht von 100 000 bis 1 000 000; insbesondere Ethylacrylat/Methylmethacrylat-Copolymeren und Methylacrylat/Ethylacrylat-Copolymeren; und
    b) Polyvinylacetat mit einem zahlenmittleren Molekulargewicht von 250 000 bis 700 000, ggf. stabilisiert mit Polyvinylpyrrolidon.

9. Verfahren nach einem der Ansprüche 1 bis 5, **dadurch gekennzeichnet, dass** man eine Pulverbeschichtung mit einem Pulver eines festen Polymers durchführt, das ausgewählt ist unter Hydroxypropylmethylcellulosen mit einem zahlenmittleren Molekulargewicht von 6 000 bis 80 000; im Gemisch mit einem Weichmacher.

10. Verfahren nach einem der Ansprüche 1 bis 5, **dadurch gekennzeichnet, dass** man zur Beschichtung eine Schmelze wenigstens eines Polymers verwendet, das ausgewählt ist unter:

    a) Polyalkylenglykolen, insbesondere Polyethylenglykolen, mit einem zahlenmittleren Molekulargewicht von 1 000 bis 15 000;

    b) Polyalkylenoxid-Polymeren oder -Copolymeren, mit einem zahlenmittleren Molekulargewicht von 4 000 bis 20 000, insbesondere Blockcopolymeren von Polyoxyethylen und Polyoxypropylen.

11. Verwendung eines granulierten, polymerbeschichteten Futtermittelzusatzes, umfassend eine feste granulierte Mischung aus einem futtermitteltauglichen Träger und wenigstens einem Enzym, beschichtet mit einem futtermitteltauglichen organischen Polymer, ausgewählt unter:

a) Polyalkylenglykolen, insbesondere Polyethylenglykolen, mit einem zahlenmittleren Molekulargewicht von 400 bis 15 000;

b) Polyalkylenoxid-Polymeren oder -Copolymeren, mit einem zahlenmittleren Molekulargewicht von 4 000 bis 20 000, insbesondere Blockcopolymeren von Polyoxyethylen und Polyoxypropylen;

c) Polyvinylpyrrolidon mit einem zahlenmittleren Molekulargewicht von 7 000 bis 1 000 000;

d) Vinylpyrrolidon/Vinylacetat-Copolymeren mit einem zahlenmittleren Molekulargewicht von etwa 30 000 bis 100 000;

e) Polyvinylalkohol mit einem zahlenmittleren Molekulargewicht von 20 000 bis 100 000;

f) Hydroxypropylmethylcellulose mit einem zahlenmittleren Molekulargewicht von 6 000 bis 80 000;

g) Alkyl(meth)acrylat-Polymeren und -Copolymeren mit einem zahlenmittleren Molekulargewicht von 100 000 bis 1 000 000, insbesondere Ethylacrylat/Methylmethacrylat-Copolymeren und Methylacrylat/Ethylacrylat-Copolymeren;

h) Polyvinylacetat mit einem zahlenmittleren Molekulargewicht von 250 000 bis 700 000, ggf. stabilisiert mit Polyvinylpyrrolidon;

zur Herstellung einer pelletierten Futtermittelzusammensetzung, wobei die Verwendung solcher polymerbeschichteten Zusätze ausgeschlossen ist, die eine Beschichtung aus Polyethylenglycol, aufgebracht als Schmelze oder wässrige Lösung, aufweisen.

**12.** Verwendung nach Anspruch 11, **gekennzeichnet durch** eine mittlere Korngröße von etwa 0,4 bis 2 mm.

**13.** Verwendung nach Anspruch 11 oder 12, **dadurch gekennzeichnet, dass** er wenigstens ein Enzym enthält, das ausgewählt ist unter Oxidoreduktasen, Transferasen, Lyasen, Isomerasen, Ligasen, Phosphatasen und Hydrolasen.

**14.** Verwendung nach Anspruch 13, **dadurch gekennzeichnet, dass** die Hydrolase ein Nichtstärkepolysaccharid-spaltendes Enzym ist.

**15.** Verwendung nach Anspruch 14, **dadurch gekennzeichnet, dass** die Phosphatase Phytase ist.

**16.** Verwendung nach Anspruch 15, **dadurch gekennzeichnet, dass** er $1*10^3$ bis $1*10^5$ U Phytase pro Gramm Gesamtgewicht umfasst.

**17.** Pelletierte Futtermittelzusammensetzung, welche neben üblichen Bestandteilen wenigstens einen Futtermittelzusatz nach einem der Ansprüche 11 bis 16 als Beimischung enthält.

**18.** Verwendung eines futtermitteltauglichen polymeren Beschichtungsmittels zur Verbesserung der Pelletierstabilität granulierter enzymhaltiger Futtermittelzusätze, welche mit dem Polymer beschichtet sind, wobei eine Beschichtung aus Polyethylenglycol, aufgebracht als Schmelze oder wässrige Lösung, ausgenommen ist.

**Claims**

**1.** A process for improving the pelleting stability of a granulated enzyme-containing feed additive, which comprises

(1) processing a mixture comprising a support suitable for feedstuffs and at least one enzyme to form crude granules;

(2) coating the crude granules with an organic polymer which is suitable for feedstuffs, by

(2a) spraying the crude granules in a fluidized bed with a melt, a solution or a dispersion of the organic polymer or carrying out in a fluidized bed a powder coating with the organic polymer; or

(2b) coating the crude granules in a mixer with a melt, a solution or a dispersion of the organic polymer or carrying out a powder coating with the organic polymer;

and if necessary post-drying, cooling and/or freeing from coarse fractions the respective resultant polymer-coated granules, with the proviso that a polyethylene glycol coating applied as a melt or an aqueous solution is excluded.

2. A process as claimed in claim 1 wherein a mixture comprising the support suitable for feedstuff and a solution of at least one enzyme is processed to form crude granules by extrusion, mixer-granulation, fluidized-bed granulation, disk agglomeration or compacting.

3. A process as claimed in one of the preceding claims wherein the moist crude granules are spheronized before carrying out the polymer coating.

4. A process as claimed in one of the preceding claims wherein the granulation and/or polymer coating is carried out continuously or batchwise.

5. A process as claimed in one of the preceding claims wherein the crude granules have a narrow particle size distribution.

6. A process as claimed in one of the preceding claims wherein the crude granules are coated with an aqueous or nonaqueous solution or dispersion of the organic polymer.

7. A process as claimed in claim 6 wherein a from 10 to 50% strength by weight aqueous or nonaqueous solution of at least one polymer is used for the coating, which polymer is selected from the group consisting of

a) polyalkylene glycols, in particular polyethylene glycols having a number average molecular weight from 400 to 15 000;

b) polyalkylene oxide polymers or copolymers having a number average molecular weight from 4000 to 20 000; in particular block copolymers of polyoxyethylene and polyoxypropylene;

c) polyvinylpyrrolidone having a number average molecular weight from 7000 to 1 000 000;

d) vinylpyrrolidone/vinylacetate copolymers having a number average molecular weight from about 30 000 to 100 000;

e) polyvinyl alcohol having a number average molecular weight from 20 000 to 100 000; and

f) hydroxypropyl methyl cellulose having a number average molecular weight from 6000 to 80 000,

with the proviso that a polyethylene glycol coating applied as an aqueous solution is excluded.

8. A process as claimed in claim 6 wherein a from 10 to 40% strength by weight aqueous or nonaqueous dispersion or solution of at least one polymer is used for the coating, which polymer is selected from the group consisting of:

a) alkyl (meth)acrylate polymers and copolymers having a number average molecular weight from 100 000 to 1 000 000; in particular ethyl acrylate/methyl methacrylate copolymers and methyl acrylate/ethyl acrylate copolymers; and
b) polyvinyl acetate having a number average molecular weight from 250 000 to 700 000, possibly stabilized with polyvinylpyrrolidone.

9. A process as claimed in one of claims 1 to 5 wherein a powder coating is carried out with a powder of a solid polymer which is selected from the group consisting of hydroxypropyl methyl celluloses having a number average molecular weight from 6000 to 80 000; mixed with a plasticizer.

10. A process as claimed in one of claims 1 to 5, wherein a melt of at least one polymer is used for the coating, which polymer is selected from the group consisting of:

a) polyalkylene glycols, in particular polyethylene glycols, having a number average molecular weight from about 1000 to 15 000;

b) polyalkylene oxide polymers or copolymers having a number average molecular weight from 4000 to 20 000, in particular block copolymers of polyoxyethylene and polyoxypropylene.

11. The use of a granulated, polymer-coated feedstuff additive that comprises a solid granulated mixture of a support suitable for feedstuffs and at least one enzyme, coated with an organic polymer which is suitable for feedstuffs and selected from the group consisting of:

a) polyalkylene glycols, in particular polyethylene glycols having a number average molecular weight from 400 to 15 000;

b) polyalkylene oxide polymers or copolymers having a number average molecular weight from 4000 to 20 000; in particular block copolymers of polyoxyethylene and polyoxypropylene;

c) polyvinylpyrrolidone having a number average molecular weight from 7000 to 1 000 000;

d) vinylpyrrolidone/vinylacetate copolymers having a number average molecular weight from about 30 000 to 100 000;

e) polyvinyl alcohol having a number average molecular weight from 20 000 to 100 000; and

f) hydroxypropyl methyl cellulose having a number average molecular weight from 6000 to 80 000;

g) alkyl (meth)acrylate polymers and copolymers having a number average molecular weight from 100 000 to 1 000 000; in particular ethyl acrylate/methyl methacrylate copolymers and methyl acrylate/ethyl acrylate copolymers; and

h) polyvinyl acetate having a number average molecular weight from 250 000 to 700 000, possibly stabilized with polyvinylpyrrolidone,

for producing a pelleted feedstuff composition, with the proviso that the use of such polymer-coated additives having a polyethylene glycol coating applied as a melt or an aqueous solution is excluded.

12. The use as claimed in claim 11 wherein it has a mean particle size of from about 0.4 to 2 mm.

13. The use as claimed in claim 11 or 12 wherein it comprises at least one enzyme which is selected from the group consisting of oxidoreductases, transferases, lyases, isomerases, ligases, phosphatases and hydrolases.

14. The use as claimed in claim 13 wherein the hydrolase is a non-starch-polysaccharide-cleaving enzyme.

15. The use as claimed in claim 14 wherein the phosphatase is phytase.

16. The use as claimed in claim 15 wherein it comprises from $1 \times 10^3$ to $1 \times 10^5$ U of phytase per gram of total weight.

17. A pelleted feedstuff composition which, in addition to customary constituents, comprises at least one feedstuff additive described in one of claims 11 to 16 as admixture.

18. The use of a polymeric coating material suitable for feedstuffs for improving the pelleting stability of granulated enzyme-containing feed additives which are coated with the polymer, with the proviso that a polyethylene glycol coating applied as a melt or an aqueous solution is excluded.

**Revendications**

1. Procédé pour augmenter la stabilité de pelletisation d'un additif granulé et contenant des enzymes, destiné à des aliments pour animaux, dans lequel

   (1) on transforme un mélange comprenant un porteur convenant à des aliments pour animaux et au moins une enzyme en un granulé brut ;
   (2) on recouvre le granulé brut d'un polymère organique convenant à des aliments pour animaux, dans lequel on

   (2a) pulvérise sur le granulé brut, dans un lit fluidisé, une fonte, une solution ou une dispersion du polymère organique, ou on réalise, dans un lit fluidisé, un revêtement par poudre avec le polymère organique ; ou
   (2b) on recouvre le granulé brut, dans un mélangeur, d'une fonte, d'une solution ou d'une dispersion du polymère organique ou on réalise un revêtement par poudre avec le polymère organique ;

   et, le cas échéant, l'on sèche, fait refroidir et/ou on libère chaque granulé obtenu, recouvert de polymère, de parties grossières, sachant qu'un revêtement de polyéthylèneglycol, appliqué comme fonte ou comme solution aqueuse, est exclu.

2. Procédé selon la revendication 1, **caractérisé en ce que** l'on transforme un mélange, comprenant le porteur convenant à des aliments pour animaux et une solution d'au moins une enzyme, en un granulé brut par le biais d'une extrusion, d'une granulation en mélangeur, d'une granulation en lit fluidisé, d'une agglomération en disque, ou d'une compression.

3. Procédé selon l'une quelconque des revendications précédentes, **caractérisé en ce que** l'on donne une forme sphérique au granulé humide avant d'appliquer le revêtement de polymère.

4. Procédé selon l'une quelconque des revendications précédentes, **caractérisé en ce que** l'on réalise la granulation et/ou le revêtement de polymère de manière continue ou discontinue.

5. Procédé selon l'une quelconque des revendications précédentes, **caractérisé en ce que** le granulé brut présente une répartition granulométrique restreinte.

6. Procédé selon l'une quelconque des revendications précédentes, **caractérisé en ce que** l'on recouvre le granulé brut d'une solution aqueuse ou non aqueuse ou d'une dispersion du polymère organique.

7. Procédé selon la revendication 6, **caractérisé en ce que** l'on met en oeuvre, pour le revêtement, une solution aqueuse ou non aqueuse de 10 à 50 % d'au moins un polymère qui est choisi parmi

   a) des polyalkylèneglycols, en particulier des polyéthylèneglycols d'un poids moléculaire moyen en nombre allant de 400 à 15 000 ;
   b) des polymères ou des copolymères d'oxyde de polyalkylène d'un poids moléculaire moyen en nombre allant de 4000 à 20 000, en particulier des copolymères en bloc de polyoxyéthylène et de polyoxypropylène ;
   c) de la polyvinylpyrrolidone d'un poids moléculaire moyen en nombre allant de 7000 à 1 000 000 ;
   d) des copolymères de vinylpyrrolidone/acétate de vinyle d'un poids moléculaire moyen en nombre allant d'environ 30 000 à 100 000 ;
   e) de l'alcool polyvinylique d'un poids moléculaire moyen en nombre allant de 20 000 à 100 000 ; et
   f) de l'hydroxypropylméthylcellulose d'un poids moléculaire moyen en nombre allant de 6000 à 80 000 ;

   sachant qu'un revêtement de polyéthylèneglycol, appliqué comme solution aqueuse, est exclu.

8. Procédé selon la revendication 6, **caractérisé en ce que** l'on met en oeuvre, pour le revêtement, une dispersion ou une solution aqueuse ou non aqueuse allant de 10 à 40 % d'au moins un polymère, qui est choisi parmi :

   a) des polymères et des copolymères de (méth)acrylate d'alkyle d'un poids moléculaire moyen en nombre allant de 100 000 à 1 000 000 ; en particulier des copolymères d'acrylate d'éthyle/de méthacrylate de méthyle et des copolymères d'acrylate de méthyle/d'acrylate d'éthyle ; et
   b) de l'acétate de polyvinyle d'un poids moléculaire moyen en nombre allant de 250 000 à 700 000, le cas échéant stabilisé avec de la polyvinylpyrrolidone.

9. Procédé selon l'une des revendications 1 à 5, **caractérisé en ce que** l'on réalise un revêtement par poudre avec une poudre d'un polymère solide, qui est choisi parmi des hydroxypropylméthylcelluloses d'un poids moléculaire moyen en nombre allant de 6000 à 80 000 ; mélangée avec un plastifiant.

10. Procédé selon l'une des revendications 1 à 5, **caractérisé en ce que** l'on utilise, pour le revêtement, une fonte d'au moins un polymère qui est choisi parmi :

> a) des polyalkylèneglycols, en particulier des polyéthylèneglycols d'un poids moléculaire moyen en nombre allant de 1000 à 15 000 ;
> b) des polymères ou des copolymères d'oxyde de polyalkylène d'un poids moléculaire moyen en nombre allant de 4000 à 20 000, en particulier des copolymères en bloc de polyoxyéthylène et de polyoxypropylène.

11. Utilisation d'un additif granulé et recouvert d'un polymère, destiné à des aliments pour animaux, comprenant un mélange granulé solide à partir d'un porteur convenant à des aliments pour animaux et d'au moins une enzyme, recouvert d'un polymère organique convenant à des aliments pour animaux, choisi parmi :

> a) des polyalkylèneglycols, en particulier des polyéthylèneglycols d'un poids moléculaire moyen en nombre allant de 400 à 15 000 ;
> b) des polymères ou des copolymères d'oxyde de polyalkylène d'un poids moléculaire moyen en nombre allant de 4000 à 20 000, en particulier des copolymères en bloc de polyoxyéthylène et de polyoxypropylène ;
> c) de la polyvinylpyrrolidone d'un poids moléculaire moyen en nombre allant de 7000 à 1 000 000 ;
> d) des copolymères de vinylpyrrolidone/acétate de vinyle d'un poids moléculaire moyen en nombre allant d'environ 30 000 à 100 000 ;
> e) de l'alcool polyvinylique d'un poids moléculaire moyen en nombre allant de 20 000 à 100 000 ;
> f) de l'hydroxypropylméthylcellulose d'un poids moléculaire moyen en nombre allant de 6000 à 80 000 ;
> g) des polymères et des copolymères de (méth)acrylate d'alkyle d'un poids moléculaire moyen en nombre allant de 100 000 à 1 000 000, en particulier des copolymères d'acrylate d'éthyle/de méthacrylate de méthyle et des copolymères d'acrylate de méthyle/d'acrylate d'éthyle ;
> h) de l'acétate de polyvinyle d'un poids moléculaire moyen en nombre allant de 250 000 à 700 000, le cas échéant stabilisé avec de la polyvinylpyrrolidone ;

pour la fabrication d'une composition d'aliments pour animaux sous forme de granulés, dans laquelle l'utilisation d'additifs recouverts de polymère, qui comportent un revêtement de polyéthylèneglycol, appliqué comme fonte ou comme solution aqueuse, est exclue.

12. Utilisation selon la revendication 11, **caractérisée en ce que** la grosseur de grain moyenne va d'environ 0,4 à 2 mm.

13. Utilisation selon la revendication 11 ou 12, **caractérisée en ce qu'**il comprend au moins une enzyme qui est choisie parmi des oxydoréductases, des transférases, des lyases, des isomérases, des ligases, des phosphatases et des hydrolases.

14. Utilisation selon la revendication 13, **caractérisée en ce que** l'hydrolase est une enzyme décomposant du polysaccharide non amidonné.

15. Utilisation selon la revendication 14, **caractérisée en ce que** la phosphatase est une phytase.

16. Utilisation selon la revendication 15, **caractérisée en ce qu'**il comprend de $1*10^3$ à $1*10^5$ U de phytase par gramme du poids total.

17. Composition d'aliments pour animaux sous forme de granulés, qui comprend, outre les éléments constituants traditionnels, au moins un additif d'aliments pour animaux décrite dans l'une des revendications 11 à 16 comme adjuvant.

18. Utilisation d'un agent de revêtement polymère convenant à des aliments pour animaux afin d'améliorer la stabilité de pelletisation d'additifs granulés et contenant des enzymes, destinés à des aliments pour animaux, lesquels sont recouverts du polymère, dans lequel un revêtement de polyéthylèneglycol, appliqué comme fonte ou comme solution aqueuse, est exclu.

Fig.1

**Fig.2**

T, C

24

23

26

M

21

22

25

G

P

EP 1 189 518 B1